# EUROPEAN PATENT APPLICATION

(11) **EP 1 247 540 A1**
(43) Date of publication of application: **09.10.2002**
(21) Application number: 01981013.4
(22) Date of filing: 07.11.2001
(51) Int. Cl.: A61M 19/00, A61C 1/07

(54) **DEVICE FOR BOTH DYNAMIC ANESTHETIC AND AFFECTED AREA SEPARATION**

(30) Priority: 10.11.2000 JP 2000343765
(71) Applicant: Kumabe, Masaru, Kofu-shi, Yamanashi 400-0856 (JP)
(72) Inventor: Kumabe, Masaru, Kofu-shi, Yamanashi 400-0856 (JP)
(74) Representative: Charlton, Peter John
(86) International application number: JP0109750
(87) International publication number: WO02038210

(57) **Abstract**

A handpiece (3a, 3b) includes an ultrasonic vibrator (21A) driven by an ultrasonic oscillator (40A) for vibration at an ultrasonic frequency in the range of 20 to 100 kHz, a low-frequency vibrator (21B) driven by a low-frequency oscillator (40B) for vibration at a low frequency, and a contact blade (10) connected to both the vibrators. Only the ultrasonic vibrator (21A) is driven for vibration and the contact blade (1) is brought into contact with an affected part for the mechanical anesthetization of the affected part. When the low-frequency vibrator (21B) is driven together with the ultrasonic vibrator (21A), low-frequency vibrations effective in separating the affected part, such as an affected tooth, are applied to the affected part in the mechanically anesthetized condition. The ultrasonic vibration of the ultrasonic vibrator (21A) does not stop and hence an operation, such as a tooth-extracting operation, is not interrupted even if the operator exerts large force on the contact blade (10). Therefore, anesthetic effect on the patient is maintained and the low-frequency vibrations facilitate the separation of the affected part, such as an affected tooth.

## Description

### TECHNICAL FIELD

The present invention relates to an instrument for mechanical anesthetization and affected part separation and, more particularly, to improvements in an instrument for mechanical anesthetization and affected part separation using a handpiece provided with a contact blade connected to an ultrasonic vibrator.

### BACKGROUND ART

The principle of mechanical anesthetization is mentioned in many Japanese patent official gazettes including JP-B No. 27298/1985 of the applicant of the present patent application and is generally known. JP-B No. 27298/1985 mentions a dental cutting device. This dental cutting device applies ultrasonic vibrations to a tooth for mechanical anesthetization when cutting the tooth to make an affected part insensitive to pains. The principle of mechanical anesthetization is applicable not only to the dental field, but also to the surgical and the orthopedic field. Mechanical anesthetization will be explained as applied to dental cutting. As the acoustic transmission system has a frequency characteristic which is unable to sense sounds of high frequencies in the ultrasonic waveband, the pain transmission system that transmits pains created by the dynamic behavior of a tooth has a frequency characteristic which is capable of sensing vibrations of low frequencies and incapable of sensing vibrations of teeth at high frequencies in the ultrasonic waveband. Mechanical anesthetization is based on such a frequency characteristic of the pain transmission system which is insensitive to vibrations of frequencies in the ultrasonic waveband. Mechanical anesthetization is described in detail in JP-B No. 27298/1985.

As mentioned in JP-B No. 6373/1992 of the applicant of the present patent application, a contact blade connected to a vibrator that is driven for ultrasonic vibrations of frequencies in the range of 20 to 100 kHz having unilateral amplitudes in the range of 4 to 10 µm is kept in contact with an affected tooth for mechanical anesthetization. The vibrator is housed in the case of a handpiece gripped by an operator so as to project outside from the case.

The operator needs to exert a considerably high force to extract a tooth or to remove a dental prosthesis by using the principle of mechanical anesthetization. For example, when extracting an affected tooth, the operator thrusts a flat tip part, which functions as an elevator, of a contact blade projecting from the case of the handpiece into the periodontal membrane to separate the affected tooth from the alveolar bone by cutting the periodontal membrane. During this operation, the vibrator is driven continuously for ultrasonic vibration to transmit ultrasonic vibrations through the contact blade to the affected tooth for anesthetic effect. This principle is applicable not only to tooth extraction in the dental field, but also to the separation and removal of affected parts in the mechanically anesthetized condition in the surgical field and the orthopedic field. Therefore, the instrument for mechanical anesthetization will be hereinafter referred to as instrument for mechanical anesthetization and affected part separation.

When the foregoing conventional instrument for mechanical anesthetization and affected part separation is used, for example, for a dental operation to extract a tooth or to remove a dental prosthesis, the operator exerts force on the instrument for mechanical anesthetization and affected part separation. Consequently, it often occurred that the amplitude of vibrations of the vibrator is reduced and the ultrasonic vibration of the vibrator stops. If the ultrasonic vibration of the vibrator stops, the anesthetic effect disappears, a pain takes the patient, and the operation for the extraction of the affected tooth or the removal of the dental prosthesis needs to be interrupted. Such stoppage of the ultrasonic vibration of the vibrator occurs because the instrument for mechanical anesthetization and affected part separation is provided with a vibration sensor for sensing the reduction of the amplitude of ultrasonic vibrations due to the exertion of an excessively high force on the instrument for mechanical anesthetization and affected part separation, and the vibration sensor provides a signal to stop an ultrasonic oscillator for vibrating the vibrator when the amplitude of the ultrasonic vibrations decreases excessively.

The present invention has been made to solve the foregoing problem and it is therefore an object of the present invention to provide an instrument for mechanical anesthetization and affected part separation capable of continuously generating ultrasonic vibrations to avoid the interruption of a surgical operation and the disappearance of an anesthetic effect on the patient even if a force is applied thereto by an operator, and capable of facilitating the separation of an affected part, such as an affected tooth without using a large force by generating low-frequency vibrations when it is expected that the operator exerts a large force, for example, to extract a tooth or to remove a dental prosthesis.

### DISCLOSURE OF THE INVENTION

According to the present invention, an instrument for mechanical anesthetization and affected part separation includes: an ultrasonic oscillator of generating ultrasonic vibrations of a frequency in the range of 20 to 100 kHz; a low-frequency oscillator; a handpiece provided with an ultrasonic vibrator which is driven for vibration at an ultrasonic frequency by the ultrasonic oscillator, a low-frequency vibrator which is driven for vibration at a low frequency by the low-frequency oscillator, and a contact blade connected to both the vibrators; and means for actuating and operating the low-frequency oscillator in an operating mode in which only the ultrasonic oscillator is operated to vibrate only the ultrasonic vibrator for mechanical anesthetization such that the low-frequency vibrator vibrates in combination with the ultrasonic vibrator to produce a modulated operating condition which promotes mechanical anesthetization and separation of an affected part.

The handpiece may include a case to be gripped by an operator, and the ultrasonic vibrator and the low-frequency vibrator may be placed in the case coaxially with the contact blade projecting outside from the front end of the case.

Desirably, the low-frequency vibrator vibrates at a frequency in the range of 100 to 220 Hz.

Desirably, the amplitude of ultrasonic vibration of the handpiece is in the range of 0.27 to 4 µm.

### BRIEF DESCRIPTION OF THE DRAWINGS

Fig. 1 is a perspective view of an instrument for mechanical anesthetization and affected part separation in a preferred embodiment according to the present invention;
Fig. 2 is a view of assistance in explaining a tooth extracting operation using a handpiece included in the instrument for mechanical anesthetization and affected part separation shown in Fig 1;
Fig. 3 is sectional view of the handpiece shown in Fig. 2; and
Fig. 4 is a block diagram of an ultrasonic oscillator, a low-frequency oscillator and other components housed in a housing included in the instrument for mechanical anesthetization and affected part separation shown in Fig. 1.

### BEST MODE FOR CARRYING OUT THE INVENTION

A preferred embodiment of the present invention will be described hereinafter with reference to the accompanying drawings.

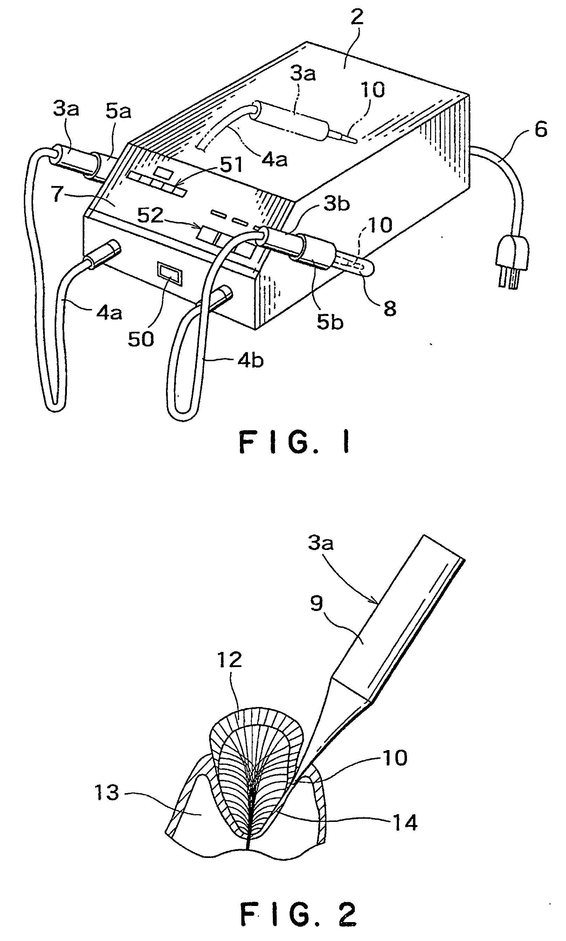

Fig. 1 shows an instrument for mechanical anesthetization and affected part separation in a preferred embodiment according to the present invention for dental use. As shown in Fig. 1, the instrument for mechanical anesthetization and affected part separation has a housing 2, and a pair of handpieces 3a and 3b which are to be held by an operator. The handpieces 3a and 3b are connected to an electrical oscillator, which will be described later, accommodated in the housing 2 by cords 4a and 4b, respectively. Tubular handpiece holders 5a and 5b are attached to the opposite side walls of the housing 2, respectively. The handpieces 3a and 3b are held on the handpiece holders 5a and 5b, respectively, while the same are not in use. The handpieces 3a and 3b are the same in basic construction. For example, the handpiece 3b is provided with a contact blade suitable for treating incisors and children's teeth, and the handpiece 3a is provided with a contact blade capable of reaching parts unreachable by the contact blade of the handpiece 3b.

Either the handpiece 3a or 3b is pulled out of the corresponding handpiece holder 5a or 5b for use. The handpiece 3a pulled out of the handpiece holder 5a is indicated by imaginary lines in Fig. 1. A power supply cord 6 is connected to the housing 2 to supply power to the electrical oscillators and controllers accommodated in the housing 2. An operating unit 7 is attached to the front wall of the housing 2. Tubular sterilizer containers 8 are connected to the lower ends of the handpiece holders 5a and 5b, respectively. When the handpieces 3a and 3b are inserted in the handpiece holders 5a and 5b, the contact blades projecting from the handpieces 3a and 3b are sterilized by a sterilizer contained in the sterilizer containers 8.

Fig. 2 shows the handpiece 3a in use. The handpiece 3b is used in the same manner as the handpiece 3a. The handpiece 3a has a tubular case 9 to be gripped by an operator's hand, and the contact blade 10 projects outside from the tubular case 9. When the handpiece 3a is used for extracting a tooth 12, the contact blade 10 cuts a periodontal membrane 14 interposed between the tooth 12 and the alveolar bone 13 to separate the tooth 12 from the alveolar bone 13.

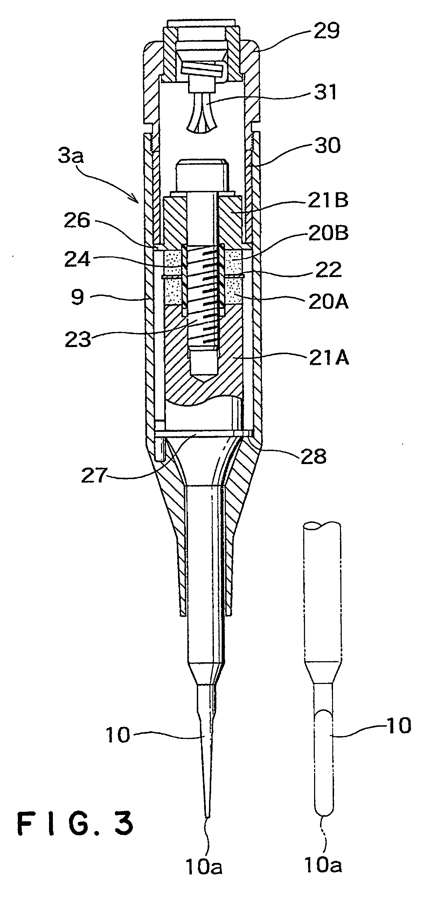

The handpieces 3a and 3b are the same in basic construction and hence only the handpiece 3a will be described with reference to Fig. 3. The tubular case 9 and the contact blade 10 are shown in Fig. 3. A first electrostrictive device 20A and a second electrostrictive device 20B are placed longitudinally contiguously in the tubular case 9. The first electrostrictive device 20A is nearer to the front end of the case 9 than the second electrostrictive device 20B. A first vibrator 21A, i.e., a first horn, is contiguous with the front end of the first electrostrictive device 20A. A second vibrator 21B, i.e., a second horn, is contiguous with the rear end of the second electrostrictive device 20B. The first electrostrictive device 20A and the first vibrator 21A generate ultrasonic vibrations. The second electrostrictive device 20B and the second vibrator 21b generate low-frequency vibrations. The first electrostrictive device 20A and the first vibrator 21A generate longitudinal vibrations, while the second electrostrictive device 20B and the second vibrator 21B generate indefinite vibrations of directions not limited to longitudinal directions.

The electrostatic devices 20A and 20B are isolated from each other by an insulating plate 22. A fastening bolt 23 is extended so as to penetrate the second vibrator 21B, the electrostrictive devices 20b and 20A and the first vibrator 21A in that order to fasten those four members together. An insulating pipe 24 is extended longitudinally through the electrostrictive devices 20A and 20B to insulate the fastening bolt 23 from the electrostrictive devices 20A and 20B.

The second vibrator 21B is provided with a flange 26 at the outer periphery thereof. The second vibrator 21B is located coaxially with the case 9 by the flange 26. The first vibrator 21A is provided with a flange 27. The first vibrator 21A is located coaxially with the case 9 by the flange 27. The flange 27 rests on a shoulder 28 formed in the case 9 to determine the longitudinal position of the assembly of the vibrators 21A and 21B and the electrostrictive devices 20A and 20B in the case 9. A rear end cap 29 is screwed in the open rear end of the case 9 to hold the assembly of the vibrators 21A and 21B and the electrostrictive devices 20A and 20B at a predetermined position in the case 9.

The contact blade 10 is a front end part of the first vibrator 21A. The contact blade 10 projects from the front end of the case 9. Since the contact blade 10 is thrust into the periodontal membrane 14 as shown in Fig. 2, the contact blade 10 has a flat tip part having a round end edge 10a as indicated by imaginary lines in Fig. 3. The electrostrictive devices 20A and 20B are connected to the electrical oscillators and the controllers accommodated in the housing 2 by wires 31.

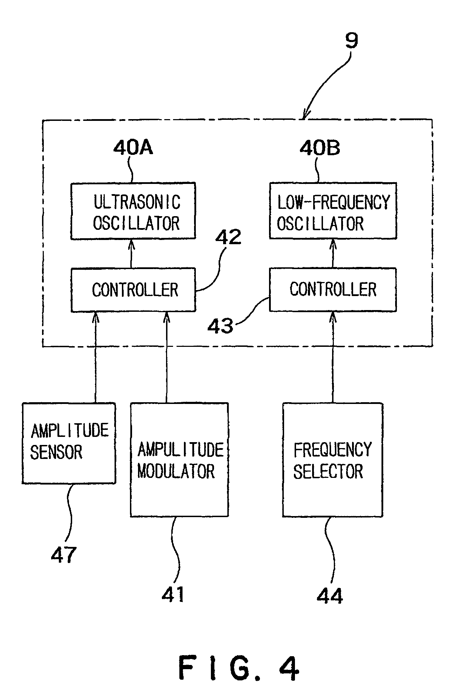

Referring to Fig. 4, the electrical oscillators accommodated in the housing 9 are an ultrasonic oscillator 40A capable of generating ultrasonic vibrations of a frequency in the range of 20 to 100 kHz, and a low-frequency oscillator 40B capable of generating low-frequency vibrations. The ultrasonic oscillator 40A can be set for either a high mode (100% mode) or a low mode (50%) through a controller 42 by an amplitude modulator 41. The low-frequency oscillator 40B is connected through a controller 43 to a frequency selector 44, which serves also as an operator capable of stopping the low-frequency oscillator 40B. The frequency selector 44 is operated to control the low-frequency oscillator 40B through the controller 43 for an optional operation or stopping. The frequency selector 44 is operated to control the low-frequency oscillator 40B through the controller 43 for generating vibrations of, for example, 100 Hz, 150 Hz or 220 Hz. An amplitude sensor 47 is connected to the ultrasonic oscillator 40A. The amplitude sensor 47 senses the amplitude of ultrasonic vibrations of the contact blade 10. When the amplitude of the ultrasonic vibrations of the contact blade 10 is caused to drop below a predetermined level by force exerted on the contact blade 10, the operation of the ultrasonic oscillator 40A is stopped.

Functions of the instrument for mechanical anesthetization and affected part separation as applied to tooth extraction will be described. The handpiece, the handpiece 3a for instance, provided with the contact blade 10 having the flat tip part is used for tooth extraction. Referring to Fig. 1, a main switch 50 placed on the front wall of the housing 2 is closed, the operator holds the handpiece 3a and pulls out the handpiece 3a from the handpiece holder 5a. When the handpiece 3a is pulled out of the handpiece holder 5a as indicated by imaginary lines in Fig. 1, the other handpiece 3b is inoperative even if the same is pulled out of the handpiece holder 5b.

In this state, the controller 42 shown in Fig. 4 starts up the ultrasonic oscillator 40A when the main switch 50 is closed. Then, the ultrasonic oscillator 40A supplies an oscillatory current to the electrostrictive device 20A. Consequently, the electrostrictive device 20A generates longitudinal ultrasonic vibrations according to the oscillatory current to drive the vibrator 21A connected to the electrostrictive device 20A for vibrations at an ultrasonic frequency corresponding to the frequency of the ultrasonic vibration of the electrostrictive device 20A. The ultrasonic vibrations are transmitted to the contact blade 10 to vibrate the contact blade 10 at the ultrasonic frequency.

While the contact blade 10 is vibrating at the ultrasonic frequency, a plurality of frequency indicating lamps 51 arranged in a line (Fig. 1) are turned on in specific order corresponding to the ultrasonic frequency to indicate the ultrasonic frequency of the vibration of the vibrator 21A. In this state, the operator holding the handpiece 3a thrusts the contact blade 10 of the handpiece 3a into the gap between the tooth 12 and the alveolar bone 13 to cut the periodontal membrane 14. If the periodontal membrane 14 could be cut without requiring very large force and the tooth 12 could be separated from the alveolar bone 13, any additional operation is not necessary.

When the cutting of the periodontal membrane 14 needs large force, an ultrasonic oscillator of a conventional instrument corresponding to the ultrasonic oscillator 40A is stopped upon the detection of the reduction of the amplitude of the ultrasonic vibrations applied to the contact blade 10 by the amplitude sensor 47 (Fig. 4). If the ultrasonic oscillator 40A is stopped, anesthetic effect disappears, and hence the tooth-extraction operation needs to be interrupted. According to the present invention, the operator closes a frequency selector switch 52 shown in Fig. 1 beforehand to avoid the interruption of the tooth-extraction operation when it is expected that large force is necessary for cutting the periodontal membrane 14.

The frequency selector switch 52 is provided with a plurality of push buttons (three push buttons in this embodiment). The push buttons are depressed selectively in a combination to select 100 Hz, 150 Hz or 220 Hz. When one of those frequencies is thus selected, the low-frequency oscillator 40B (Fig. 4) oscillates at the selected low frequency to supply a low-frequency oscillatory current to the electrostrictive device 20B to drive the vibrator 21B for vibration at the same low frequency. Low-frequency vibrations thus generated by the vibrator 21B are transmitted through the fastening bolt 23 to the vibrator 21A. Consequently, the contact blade 10 connected to the vibrator 21A vibrates at both the ultrasonic frequency and the low frequency, i.e., 100 Hz, 150 Hz or 220 Hz. Thus, the ultrasonic vibrations are transmitted continuously to the periodontal membrane into which the contact blade 10 is thrust, the tooth and the alveolar bone to exercise an anesthetic effect.

The low-frequency vibrations are transmitted through the contact blade 10 to the periodontal membrane, the tooth and the alveolar bone. Since the low-frequency vibrations, in addition to the ultrasonic vibrations, are applied to the periodontal membrane, the tooth and the alveolar bone, the periodontal membrane, the tooth and the alveolar bone respectively having different natural frequencies are vibrated in different phases, respectively, whereby the periodontal membrane, the tooth and the alveolar bone are separated from each other, the periodontal membrane is destroyed, and the tooth is separated from the alveolar bone and can be extracted. Since the tooth can be easily separated from the alveolar bone, large force does not need to be applied to the contact blade 10, and hence the stoppage of the ultrasonic vibrator due to the application of large force on the contact blade 10 can be avoided.

Preferably, the amplitude of the ultrasonic vibration of the contact blade 10 according to the present invention is in the range of 0.24 to 4 µm. Amplitudes in this range are far smaller than those in the unilateral amplitude range of 4 to 10 µm in the related art disclosed in JP-B No. 6373/1992. Since the amplitude of the ultrasonic vibration of the contact blade is small, the amount of heat generated in the contact blade and such is reduced, and the patient senses the ultrasonic vibrations scarcely.

The present invention thus superposes the low-frequency vibrations on the ultrasonic vibrations to modulate the ultrasonic vibrations. The degree of modulation, i.e., modulation factor, can be adjusted to, for example, either 50% or 100%. The degree of modulation can be changed by changing the combination of the depressed push buttons of the frequency selector switch 52.

Although the construction and functions of the embodiment of the present invention has been described in connection with the dental treatment for tooth extraction and dental prosthesis removal, the principle of the present invention is applicable to removing or cutting of a part of tissues of a human body in the anesthetized condition in the surgical and the orthopedic field. Therefore, the fields of application of the present invention include the surgical and the orthopedic field.

As apparent form the foregoing description of the preferred embodiment, according to the present invention, the ultrasonic vibrations generated by the ultrasonic vibrator can be modulated in an operating mode in which only the ultrasonic oscillator is driven to vibrate only the ultrasonic vibrator for mechanical anesthetization by additionally driving the low-frequency vibrator. Therefore, when it is expected that large force must be applied to the contact blade, the low-frequency vibrator is driven for vibration in addition to the ultrasonic vibrator to facilitate the separation of the affected part so that the separation of the affected part can be achieved with reliability without applying large force to the contact blade and without causing the stoppage of the ultrasonic vibration of the contact blade.

Since the ultrasonic vibrator and the low-frequency vibrator are placed in the case coaxially with the contact blade projecting outside from the front end of the case of the handpiece, either only the ultrasonic vibrations, or both the ultrasonic vibrations and the low-frequency vibrations can be surely and efficiently transmitted to the contact blade.

The low-frequency vibrations of a frequency in the range of 100 to 220 Hz enable the most effective separation of the affected part.

Since the amplitude of the ultrasonic vibration of the contact blade is in the range of 0.27 to 4 µm, the amount of generated heat is small, and the patient senses the ultrasonic vibrations scarcely.

### INDUSTRIAL APPLICABILITY

The present invention is applicable to instruments for mechanical anesthetization and affected part separation to be used for extracting an affected tooth in the dental field, and for separating and cutting off an affected part in the anesthetized condition in the surgical and the orthopedic field.

## Claims

1. An instrument for mechanical anesthetization and affected part separation comprising:
an ultrasonic oscillator of generating ultrasonic vibrations of a frequency in a range of 20 to 100 kHz;
a low-frequency oscillator;
a handpiece provided with an ultrasonic vibrator which is driven for vibration at an ultrasonic frequency by the ultrasonic oscillator, a low-frequency vibrator which is driven for vibration at a low frequency by the low-frequency oscillator, and a contact blade connected to both the vibrators; and
means for actuating and operating the low-frequency oscillator in an operating mode in which only the ultrasonic oscillator is operated to vibrate only the ultrasonic vibrator for mechanical anesthetization such that the low-frequency vibrator vibrates in combination with the ultrasonic vibrator to produce a modulated operating condition which promotes mechanical anesthetization and separation of an affected part.

2. The instrument for mechanical anesthetization and affected part separation according to claim 1, wherein the handpiece has a case to be gripped by an operator, the ultrasonic vibrator and the low-frequency vibrator being placed in the case coaxially with the contact blade projecting outside from a front end of the case.

3. The instrument for mechanical anesthetization and affected part separation according to claim 1 or 2, wherein the low-frequency vibrator vibrates at a frequency in a range of 100 to 220 Hz.

4. The instrument for mechanical anesthetization and affected part separation according to any one of claims 1 to 3, wherein an amplitude of ultrasonic vibration of the handpiece is in a range of 0.27 to 4 µm.
